# EUROPEAN PATENT APPLICATION

(11) **EP 4 775 641 A1**
(43) Date of publication of application: **15.07.2026**
(21) Application number: 25305034.8
(22) Date of filing: 13.01.2025
(51) Int. Cl.: C09J 171/02

(54) **COMPOSITION COMPRISING A SILYLATED POLYMER**

(71) Applicant: Bostik SA, 92800 Puteaux (FR)
(72) Inventor: CAO, Yichen, SHANGHAI (CN)
(74) Representative: Arkema Patent

(57) **Abstract**

The invention relates to a composition comprising:
- a silylated polymer, and
- a composite filler comprising calcium carbonate and silica.

The invention also relates to a method for bonding substrates implementing the composition according to the invention.

The invention further relates to an article comprising the composition according to the invention.

Finally, the invention relates to the use of the composition according to the invention.

## Description

### TECHNICAL FIELD

The present invention relates to a composition comprising a silylated polymer and its use, a method for bonding substrates and an article.

### TECHNICAL BACKGROUND

Silylated polymers are typically used as adhesives, sealants, coatings, for example, in the aerospace, automotive, or construction industries. Such polymers generally include terminal alkoxysilane groups bonded, directly or indirectly, to a main polymer chain. Industrially, they can be obtained notably from the reaction of an isocyanate-terminated prepolymer and a silylated compound comprising alkoxysilane functions.

Alkoxysilane-terminated polymer-based compositions (also known as silylated polymer-based compositions) have the advantage of being free from free isocyanates (once the silylated polymer is formed). These compositions are therefore a preferred alternative from a toxicological point of view to isocyanate-terminated polyurethane-based compositions.

The crosslinking reaction of these silylated polymer-based compositions occurs in the presence of moisture by forming a siloxane bond (-Si-O-Si-) that occurs after hydrolysis of the alkoxysilane groups of the silylated polymer molecules. These bonds unite the polymer chains into a solid three-dimensional network.

In some applications, such as electronics, devices are designed to be smaller for hand hold, which requires thinner glue lines for sealing or bonding the components of the device. Therefore, a composition having a low viscosity is necessary to achieve thin lines.

However, it is difficult to obtain a composition, in particular a sealant, based on silylated polymer that has a low viscosity, while keeping a high shear strength (to ensure that the adhesive bond will not break easily).

Therefore, there is a need for a composition having at the same time a low viscosity and a high shear strength, in particular for applications like electronics which require thin glue lines.

### SUMMARY OF THE INVENTION

The invention relates to a composition comprising:
- a silylated polymer, and
- a composite filler comprising calcium carbonate and silica.

The invention also relates to a method for bonding substrates comprising the steps of:
- coating, on at least one surface of the substrates, of the composition according to the invention, then
- contacting the substrates.

The invention further relates to an article comprising the composition according to the invention, said composition bonding at least two substrates of said article.

Finally, the invention relates to the use of the composition according to the invention as an adhesive or a sealant.

The present invention makes it possible to address the need mentioned above. In particular, it has been surprisingly found that adding the claimed composite filler to a silylated polymer-based composition makes it possible to obtain a composition having both a high shear strength and a low viscosity.

### DESCRIPTION OF THE INVENTION

### Composition according to the invention

### Silylated polymer

By "silylated polymer", it is intended a polymer comprising at least one alkoxysilyl group, preferably at least two alkoxysilyl end groups.

The silylated polymer is generally a more or less viscous liquid. The silylated polymer may have a viscosity at 23°C ranging from 0.5 to 150 Pa.s, preferably from 5 to 100 Pa.s, more preferably from 5 to 50 Pa.s.

The viscosity of the silylated polymer can for example be measured according to a Brookfield method at 23°C and 50% relative humidity.

The silylated polymer preferably comprises at least two alkoxysilyl end groups of formula (I):

-Si(R⁴)ₚ(OR⁵)₃₋ₚ

wherein:
- R⁴ represents a linear or branched alkyl radical comprising from 1 to 4 carbon atoms, and when p is equal to 2 the R⁴ radicals are identical or different;
- R⁵ represents a linear or branched alkyl radical comprising from 1 to 4 carbon atoms, and when p is equal to 0 or 1 the R⁵ radicals are identical or different, with the possibility that two OR⁵ groups may be engaged in the same ring;
- p is an integer equal to 0, 1 or 2.

The various groups, radicals and letters which are included in the formulas described in the present text retain throughout the present text the same definition, unless otherwise stated.

Preferably, the alkoxysilyl end groups are of formula (I) wherein:
- R⁴ represents an alkyl radical comprising 1 or 2 carbon atoms, preferably 1 carbon atom;
- R⁵ represents an alkyl radical comprising from 1 or 2 carbon atoms, preferably 1 carbon atom;
- p is an integer equal to 0 or 1.

Advantageously, the silylated polymer is of formula (II), (III) and/or (IV): 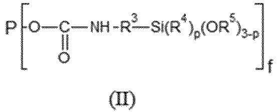 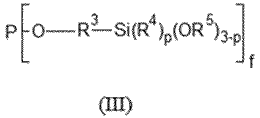 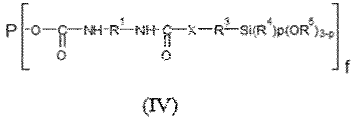 wherein:
- R⁴, R⁵ and p have the same meaning as in formula (I) described above,
- P represents a saturated or unsaturated polymeric radical, with a linear or branched open chain, or comprising one or more rings being optionally aromatic, optionally comprising one or more heteroatoms such as oxygen, nitrogen, sulfur and/or silicon, preferably oxygen and/or nitrogen,
- R¹ represents a divalent saturated or unsaturated hydrocarbon radical comprising from 5 to 15 carbon atoms, being a linear or branched open chain, or comprising one or more rings being optionally aromatic,
- R³ represents a divalent linear or branched alkylene radical comprising from 1 to 6 carbon atoms, preferably from 1 to 3 carbon atoms,
- X represents a divalent radical chosen from -NH-, -NR⁷- or -S-,
- R⁷ represents a linear or branched alkyl radical comprising from 1 to 20 carbon atoms and optionally comprising one or more heteroatoms,
- f is an integer ranging from 1 to 6, preferably from 2 to 4, more preferably equal to 2 or 3.

Advantageously, the silylated polymer is of formula (II), (III) and/or (IV), preferably of formula (II) and/or (III), wherein P preferably represents a polymer radical selected from polyethers, polycarbonates, polyesters, polyolefins, polyacrylates, polyurethanes, polysiloxanes, polyether polyurethanes, polyester polyurethanes, polyolefin polyurethanes, polyacrylate polyurethanes, polycarbonate polyurethanes and polyether/polyester polyurethane blocks, preferably from polyethers, polyurethanes and polyether polyurethanes, more preferably from polyethers.

According to an embodiment, the silylated polymer is of formula (II'), (II"), (III') and/or (IV'): 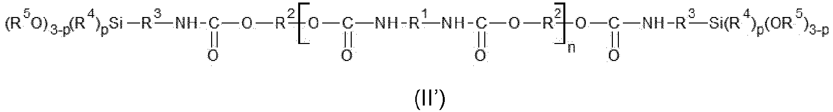 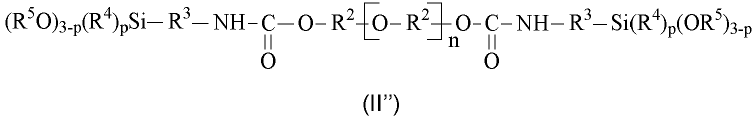 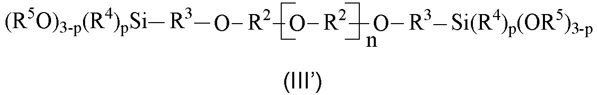 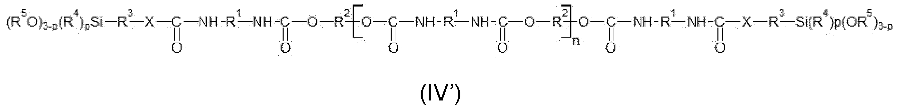 wherein:
- R¹, R³, R⁴, R⁵, X, R⁷ and p have the same meaning as in formulas (II), (III) and (IV),
- R² represents a saturated or unsaturated, linear or branched, divalent hydrocarbon radical, optionally comprising one or more heteroatoms such as oxygen, nitrogen, sulfur and/or silicon,
- n is an integer, preferably n is such that the number average molecular weight of the silylated polymer varies from 1000 g/mol to 70000 g/mol, preferably from 5000 g/mol to 50000 g/mol, more preferably from 10000 g/mol to 40000 g/mol.

In the silylated polymers of formulas (II'), (II"), (III') or (IV') described above, when the radical R² comprises one or more heteroatoms, said heteroatoms are not present at the end of the chain. In other words, the free valencies of the divalent radical R² linked to the neighboring oxygen atoms of the silylated polymer each come from a carbon atom. Therefore, the main chain of the R² radical is terminated by a carbon atom at each of the two ends, said carbon atom thus having a free valence.

When the silylated polymer is of formula (II') and/or (IV'), the radical R² may be selected from the following divalent radicals, the formulas showing the two free valencies:
- derived from a polypropylene glycol: 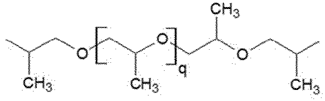
- derived from a polyester diol: 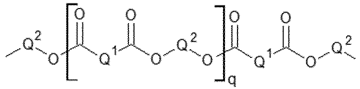
- derived from a polybutadiene diol: 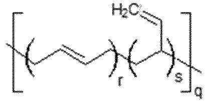
- derived from a polyacrylate diol: 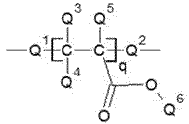
- derived from a polysiloxane diol: 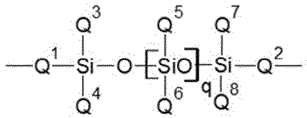 wherein:
- q represents an integer, advantageously such that the number average molecular weight of the radical R² ranges from 200 g/mol to 48600 g/mol, preferably from 500 g/mol to 18600 g/mol, more preferably from 1000 g/mol to 12600 g/mol,
- r and s represent zero or an integer, advantageously such that the number average molecular weight of the radical R² ranges from 200 g/mol to 48600 g/mol, preferably from 500 g/mol to 18600 g/mol, more preferably from 1000 g/mol to 12600 g/mol, provided that the sum r+s is different from zero,
- Q¹ represents a linear or branched, saturated or unsaturated, divalent aromatic or aliphatic alkylene radical, preferably having from 1 to 18 carbon atoms, more preferably from 1 to 8 carbon atoms,
- Q² represents a linear or branched divalent alkylene radical preferably having from 2 to 36 carbon atoms, more preferably from 1 to 8 carbon atoms,
- Q³, Q⁴, Q⁵, Q⁶, Q⁷ and Q⁸ represent, independently of each other, a hydrogen atom or an alkyl, alkenyl or aromatic radical, preferably having 1 to 12 carbon atoms, preferably 2 to 12 carbon atoms, more preferably from 2 to 8 carbon atoms.

According to an embodiment, R¹ is selected from the following divalent radicals, the formulas showing the two free valencies:
a) the divalent radical derived from isophorone diisocyanate (IPDI): 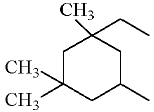
b) the divalent radical derived from dicyclohexylmethane diisocyanate (H12MDI): 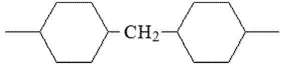
c) the divalent radicals derived from the 2,4- and 2,6- isomers of toluene diisocyanate (TDI): 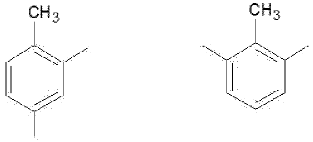
d) the divalent radicals derived from the 4,4' and 2,4'- isomers of diphenylmethane diisocyanate (MDI): 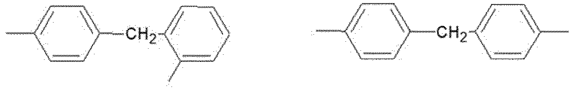
e) the divalent radical derived from hexamethylene diisocyanate (HDI): -(CH₂)₆-
f) the divalent radical derived from m-xylylene diisocyanate (m-XDI):

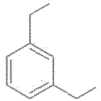

According to a preferred embodiment, the silylated polymer is of formula (II") and/or (III'), and the radical R² preferably represents a linear or branched divalent alkylene radical comprising from 2 to 4 carbon atoms, more preferably a divalent linear or branched alkylene radical comprising 3 carbon atoms, even more preferably an iso-propylene radical (of formula -CH₂-CH(CH₃)-).

According to a particularly preferred embodiment, the silylated polymer is a polymer of formula (II") and/or (III') wherein:
- R² represents an iso-propylene radical,
- R⁴ represents a methyl radical,
- R⁵ represents a methyl radical, and
- p is equal to 0 or 1.

In the presence of moisture, the alkoxysilyl groups of the polymers are converted into silanol groups, which subsequently undergo reaction with other silanol groups to form covalent siloxane bonds between individual polymer molecules, which ensure the creation of a crosslinked polymeric network.

The number average molecular weight of the silylated polymer may vary from 1000 g/mol to 70000 g/mol, preferably from 5000 g/mol to 50000 g/mol, more preferably from 10000 g/mol to 40000 g/mol.

The number average molecular weight of a polymer can be measured by size exclusion chromatography (or SEC), which is also denoted by the term "gel permeation chromatography" (or GPC), preferably with a polystyrene calibration.

The silylated polymer content in the composition according to the invention may be comprised between 20 % and 80 % by weight with respect to the total weight of the composition, preferably between 30 % and 70 % by weight, more preferably between 35 % and 65 % by weight, e.g., 20, 25, 30, 35, 40, 45, 50, 55, 60, 65, 70, 75, 80 % by weight.

In the context of the invention, the ranges of values are understood to be inclusive. For example, the range "between 20 % and 80 %" includes, in particular, the values 20 % and 80 %.

### Composite filler

A "composite filler comprising X and Y" is not a mixture of a filler comprising X and a filler comprising Y, but rather a filler wherein X and Y are "fused" together and cannot be separated by physical means. In the composite filler, the components X and Y typically share part of the crystal lattice or grow from each other as crystal nucleus; for example, one of the components X and Y may be present as a continuous or intermediate layer at the surface of the particles of the other component and/or inside said particles.

The composite filler may comprise between 80 % and 99 % by weight of calcium carbonate (CaCO₃) with respect to the total weight of the composite filler, preferably between 87 % and 98 % by weight, more preferably between 91 % and 97 % by weight, e.g., 80, 81, 82, 83, 84, 85, 86, 87, 88, 89, 90, 91, 92, 93, 94, 95, 96, 97, 98, 99 % by weight.

The composite filler may comprise between 0.5 % and 10 % by weight of silica (SiO₂) with respect to the total weight of the composite filler, preferably between 2 % and 8 % by weight, more preferably between 3 % and 7 % by weight, e.g., 0.5, 1, 2, 3, 4, 5, 6, 7, 8, 9, 10 % by weight.

Preferably, the composite filler further comprises magnesium carbonate (MgCO₃). When present, the amount of magnesium carbonate may be comprised between 0.1 % and 10 % by weight with respect to the total weight of the composite filler, preferably between 0.3 % and 5 % by weight, more preferably between 0.5 % and 2 % by weight, e.g., 0.5, 0.6, 0.7, 0.8, 0.9, 1, 1.2, 1.5, 1.8, 2, 2.5, 3, 3.5, 4, 4.5, 5 % by weight.

The calcium carbonate and magnesium carbonate contents may be determined according to GB/T19281-2014. The silica content may be determined by Fourier Transform Infrared Spectroscopy (FTIR).

The composite filler may be further coated with a fatty acid (for example stearic acid), but is preferably not coated with a fatty acid.

According to a preferred embodiment, the composite filler comprises (or consists essentially of):
- between 80 % and 99 % by weight of calcium carbonate,
- between 0.5 % and 10 % by weight of silica, and
- preferably between 0.1 % and 10 % by weight of magnesium carbonate,
the weight percentages being with respect to the total weight of the composite filler.

By "consists essentially of", it is intended that the composite filler comprises less than 5 % by weight of components other than the aforementioned components, relative to the total weight of the composite filler, preferably less than 2% by weight, more preferably less than 1% by weight.

The average particle size Dv50 of the composite filler may be comprised between 0.3 µm and 10 µm, preferably between 1 µm and 5 µm. This average particle size Dv50 corresponds to the maximum size of 50% of the smallest particles by volume and may be measured by laser diffraction, in particular on a MALVERN type device (for example according to the ISO 13320 standard).

Unless otherwise stated, standards mentioned throughout the present application are those in effect on the date the application is filed.

The composite filler content in the composition according to the invention may be comprised between 10 % and 60 % by weight with respect to the total weight of the composition, preferably between 20 % and 55 % by weight, more preferably between 25 % and 50 % by weight, e.g., 10, 15, 20, 25, 30, 35, 40, 45, 50, 55, 60 % by weight.

The composite filler may be commercially available, for example from Greenore.

The composite filler may be prepared by a process comprising coprecipitation of at least calcium carbonate and silica, preferably with magnesium carbonate; coprecipitation preferably occurs when carbonation is carried out. For example, the process may comprise a carbonation of at least calcium hydroxide (preferably calcium hydroxide and magnesium hydroxide) in the presence of a silica source, which may be added before or during the carbonation (so that the calcium carbonate coprecipitates with silica). The carbonation may be implemented by using carbon dioxide. The silica source may be selected from silica (preferably amorphous), metal silicates (such as sodium silicate), and mixtures thereof, preferably silica. Alternatively, the carbonation may be performed on a solution comprising at least calcium and silicon ions (preferably with magnesium ions). The solution may be an aqueous solution. The ions may be chelated with a chelating compound, such as citrate, glutamate and/or picolinate. The carbonation may be implemented by using carbon dioxide, preferably in presence of an alkaline reagent such as calcium oxide (and magnesium oxide if magnesium ions are present in the solution).

### Crosslinking catalyst

Advantageously, the composition according to the invention further comprises a crosslinking catalyst.

The crosslinking catalyst may be any catalyst known by the skilled person for the condensation of silanol.

As crosslinking catalysts for the condensation of silanol, the following examples may be cited:
- organic derivatives of titanium such as titanium acetyl acetonate, titanium tetrapropoxide, titanium tetrabutoxide;
- organic derivatives of zirconium such as zirconium acetyl acetonate, zirconium tetrapropoxide, zirconium tetrabutoxide;
- aluminum such as aluminum chelate (for example K-KAT^{®} 5218 by KING INDUSTRIES);
- amines such as 1,8-diazabicyclo[5.4.0]undec-7-ene (DBU), 1,5-diazabicyclo[4.3.0]non-5-ene (DBN), diethyl ether-2 ,2'-morpholine (DMDEE), 1,4-diazabicyclo[2.2.2]octane (DABCO), 1,5,7-triazabicyclo[4.4.0]dec-5-ene (TBD);
- catalysts based on zinc carboxylate (for example K-KAT^{®} 670 by KING INDUSTRIES);
- tin-based catalysts such as compounds derived from dioctyltin or dibutyltin, in particular dioctyl tin oxide, dioctyl tin diacetate, dioctyl tin dilaurate, dioctyl tin dicarboxylate, dibutyl tin diacetyl acetonate (CAS: 22673-19-4), dibutyl tin dilaurate (DBTDL), dibutyl tin diacetate or dibutyl tin oxide, preferably dibutyl tin diacetyl acetonate;
- guanidine derivatives such as 1-(o-tolyl)biguanide (CAS: 93-69-6), for example RHENOCURE 1000 C (by RheinChemie Additives).

Preferably, the crosslinking catalyst is a tin-based catalyst, preferably selected from compounds derived from dioctyltin and dibutyltin, in particular from dioctyltin and dibutyltin catalysts as described above.

The crosslinking catalyst content in the composition according to the invention may be comprised between 0.01 % and 5 % by weight with respect to the total weight of the composition, preferably between 0.05 % and 2 % by weight, more preferably between 0.1 % and 1 % by weight, e.g., 0.1, 0.3, 0.5, 0.8, 1, 1.5, 2, 2.5, 3, 4, 5 % by weight.

### Adhesion promoter

The composition according to the invention may further comprise an adhesion promoter.

The adhesion promoter may be selected from amino-, mercapto- and epoxyalkoxysilanes, and mixtures thereof. Preferably, the adhesion promoter is selected from aminoalkoxysilanes, more preferably from aminotrialkoxysilanes, even more preferably from aminotrimethoxysilanes, for example (3-aminopropyl)trimethoxysilane.

As an example of an epoxy-alkoxysilane, mention may be made of (3-glycidyloxypropyl)trimethoxysilane (also called GLYMO).

Advantageously, the aminotrimethoxysilanes are formed by the group consisting of 4-amino-3,3-dimethylbutyltrimethoxysilane, (3-aminopropyl)trimethoxysilane and N-(3-(trimethoxysilyl)propyl)ethylenediamine. Preferably, the aminotrimethoxysilane is (3-aminopropyl)trimethoxysilane.

The adhesion promoter content may be comprised between 0.1% and 5% by weight with respect to the total weight of the composition according to the invention, preferably between 0.5 % and 3 % by weight, e.g., 0.1, 0.3, 0.5, 0.8, 1, 1.2, 1.5, 1.7, 2, 2.3, 2.5, 3, 3.5, 4 % by weight.

### Other additives

The composition according to the invention may further comprise one or more additives, preferably selected from fillers other than the composite filler, moisture scavengers, pigments, plasticizers, solvents, rheology agents, UV stabilizers (or antioxidants), and mixtures thereof, preferably selected from moisture scavengers, pigments, rheology agents, UV stabilizers (or antioxidants), and mixtures thereof, in particular from moisture scavengers and mixtures thereof.

The total content of additives in the composition according to the invention may vary from 0.1 % to 15 % by weight with respect to the total weight of the composition, preferably from 0.3 % to 10 % by weight, more preferably from 0.5 % to 5 % by weight.

The composition according to the invention may comprise a filler other than the composite filler as described above.

The filler may be selected from mineral fillers, organic fillers and mixtures thereof, preferably from mineral fillers.

The mineral fillers are typically provided in the form of particles of diverse geometry. For example, they may be spherical, fibrous or have an irregular shape.

The mineral filler may be selected from the group consisting of clays (in particular talc), quartz, carbonated fillers (in particular calcium carbonate, which may be coated with fatty acid (the latter being preferably precipitated)), kaolins, gypsum, hollow mineral microspheres (in particular hollow glass microspheres such as those made of calcium sodium borosilicate or of aluminosilicate), zeolites, and mixtures thereof.

The mineral filler can be untreated or treated, for example using a fatty acid comprising stearic acid.

The average particle size of the mineral filler can range from 10 nm to 400 µm, preferably from 20 nm to 100 µm, more preferably from 30 nm to 50 µm.

In the present description, the average particle size advantageously corresponds to the particle size d50, that is to say the maximum size of 50% of the smallest particles by volume, and can be measured with a particle size analyzer, in particular by laser diffraction on a MALVERN type device (for example according to the ISO 13320 standard).

The organic filler may be selected from polyvinyl chloride (PVC), polyolefins, rubber, ethylene vinyl acetate (EVA), hollow microspheres of expandable or non-expandable thermoplastic polymer (such as hollow microspheres of vinylidene chloride/ acrylonitrile), aramid fibers (such as Kevlar^{®}), and mixtures thereof.

The average particle size of the organic filler may be less than or equal to 50 µm, preferably between 5 and 20 µm.

The filler content may be up to 10 % by weight with respect to the total weight of the composition according to the invention, preferably up to 5 % by weight.

Advantageously, the composition according to the invention comprises a moisture scavenger.

Suitable moisture scavengers (or desiccants) are in particular alkoxysilanes such as trialkoxysilanes (particularly trimethoxysilanes). Moisture scavengers advantageously prolong the shelf life of the composition according to the invention during storage and transport, before its use.

Advantageously, the moisture scavenger is selected from vinyltrimethoxysilane, trimethoxymethylsilane, propyltrimethoxysilane, vinyltriethoxysilane, alkoxyarylsilanes (for example GENIOSIL^{®} XL 70 sold by WACKER), and mixtures thereof.

Preferably, the moisture scavenger is selected from vinyltrimethoxysilane, vinyltriethoxysilane, and mixture thereof, more preferably vinyltrimethoxysilane.

The moisture scavenger content may be between 0.1 % and 5 % by weight with respect to the total weight of the composition according to the invention, preferably between 0.5 % and 3 % by weight.

The composition according to the invention may comprise a pigment.

The pigment may be selected from organic pigments, inorganic pigments, and mixtures thereof. For example, the pigment may be selected from phthalocyanine-based pigments (such as copper phthalocyanine, halogenated copper phthalocyanine, metal-free phthalocyanine), anthraquinone-based pigments (such as 1-methylamino-4-o-tolylaminoanthranquinone, 1,4-diisopropyl aminoanthraquinone, 1,4-diaminoanthraquinone, 1,4-dibutyl-aminoanthraquinone, 1-amino-4-anilinoanthraquinone), quinacridone-based pigments, perylene-based pigments, thioindigo-based pigments, quinophthalone-based pigments, titanium dioxide, carbon black, manganese ferrite, and mixtures thereof.

The pigment content may be up to 5 % by weight with respect to the total weight of the composition according to the invention, preferably up to 3 % by weight.

The composition according to the invention may comprise a plasticizer, but preferably not more than 5 % by weight with respect to the total weight of the composition according to the invention.

The plasticizer may be selected from alkylphthalates (such as diisodecyl phthalate, diisononyl phthalate, diisononyl hexahydrophthalate), benzoates (such as nonylbenzoate), esters of alkylsulphonic acid and phenol (e.g. MESAMOLL^{®} by LANXESS), pentaerythritol tetravalerate, diisononyl-1,2-cyclohexane dicarboxylate (for example HEXAMOLL DINCH^{®} marketed by BASF), dioctyl carbonate, natural oils (optionally epoxidized), and mixtures thereof.

The plasticizer content may be up to 5 % by weight with respect to the total weight of the composition according to the invention, preferably up to 2 % by weight.

The composition according to the invention may comprise between 0 % and 5 % by weight of a solvent with respect to the total weight of said composition. Preferably, the solvent is volatile at room temperature (temperature of about 23°C). For example, the volatile solvent may be selected from alcohols that are volatile at room temperature, such as ethanol or isopropanol. The volatile nature of the solvent allows the joint, obtained after curing the composition, to no longer contain any solvent.

In the present text, by "about X", it is intended more or less 10 % the value of X.

The composition according to the invention may comprise a rheology agent.

The rheology agent may selected from:
- PVC plastisols, corresponding to a suspension of PVC in a plasticizer miscible with PVC, obtained in situ by heating at temperatures ranging from 60°C to 80°C. These plastisols can be those described in particular in "Polyurethane Sealants", Robert M. Evans, ISBN 087762-998-6,
- fumed silica (hydrophobic or hydrophilic), such as HDK^{®} N20 by WACKER,
- urea derivatives derived from the reaction of a diisocyanate monomer, preferably an aromatic diisocyanate monomer such as methylene diphenyl diisocyanate (e.g. 4,4'-MDI), with an aliphatic primary amine such as butylamine,
- waxes derived from castor oil, such as THIXCIN^{®} R sold by ELEMENTIS,
- amide waxes, preferably micronized, such as CRAYVALLAC^{®} SLX, CRAYVALLAC^{®} SLWor CRAYVALLAC^{®} SUPER by Arkema, or THIXATROL^{®} AS8053 or THIXATROL^{®} MAX (EC No: 432-430 -3) which are available from ELEMENTIS, or even RHEOBYK 7503 by BYK, and
- mixtures thereof.

By "amide waxes", it is intended waxes comprising one or more compounds having at least one amide group. In particular, amide waxes can be obtained from fatty acid(s) (for example ricinoleic acid) and (di)amine(s).

By "micronized", it is intended an average particle size of less than 1 mm, advantageously less than 500 µm, preferably less than 100 µm, more preferably less than 10 µm.

The content of rheology agent may be up to 15 % by weight with respect to the total weight of the composition according to the invention, preferably up to 10 % by weight.

The composition according to the invention may comprise a UV stabilizer (or antioxidant). UV stabilizers are typically introduced to protect the composition from degradation resulting from reaction with oxygen which is likely to be formed by the action of heat or light. These compounds may include antioxidants capable of scavenging free radicals.

The UV stabilizer (or antioxidant) may be selected from benzotriazoles, benzophenones, hindered phenols such as octadecyl 3-(3,5-di-tert-butyl-4-hydroxyphenyl)propionate (CAS: 2082-79-3), pentaerythritol tetrakis[3-(3,5-di-tert-butyl-4-hydroxyphenyl)propionate] (CAS: 6683-19-8) or ethylene bis(oxyethylene) bis-(3-(5-tert-butyl-4-hydroxy-m-tolyl)propionate) (CAS: 36443-68-2), hindered amines (also named HALS for "hindered amine light stabilizers") such as bis(1-octyloxy-2,2,6,6-tetramethyl-4-piperidyl)sebacate, bis(2,2,6,6-tetramethyl-4-piperidyl)sebacate, bis(1,2,2,6,6-pentamethyl-4-piperidyl)sebacate (CAS: 41556-26-7), methyl 1,2,2,6,6-pentamethyl-4-piperidyl sebacate (CAS: 82919-37-7) or 4,4'-bis(α,α-dimethylbenzyl)diphenylamine, and mixtures thereof.

Hindered phenols are generally phenols substituted with at least one bulky group (such as tert-butyl) preferably in the ortho position with respect to the hydroxy group.

The UV stabilizer (or antioxidant) content may be up to 5 % by weight with respect to the total weight of the composition according to the invention, preferably up to 3 % by weight.

### Other features of the composition according to the invention

According to an embodiment, the composition according to the invention comprises:
- between 20 % and 80 % by weight of a silylated polymer, preferably of formula (II) and/or (III),
- between 10 % and 60 % by weight of a composite filler comprising calcium carbonate and silica, preferably having an average particle size Dv50 comprised between 0.3 µm and 10 µm,
- between 0.01 % and 5 % by weight of a crosslinking catalyst,
- optionally between 0.1% and 5% by weight of an adhesion promoter, and
- optionally between 0.1 % and 15 % by weight of one or more additives, preferably selected from fillers other than the composite filler, moisture scavengers, pigments, plasticizers, solvents, rheology agents, UV stabilizers (or antioxidants), and mixtures thereof,
the weight percentages being with respect to the total weight of the composition.

Preferably, the composition according to the invention consists essentially of the ingredients mentioned above. By "consists essentially", it is intended that the composition comprises less than 5 % by weight of ingredients other than the aforementioned ingredients, relative to the total weight of the composition, preferably less than 2% by weight, even more preferably less than 1% by weight.

The ingredients of this embodiment and their particular contents are as described above, including the embodiments and preferred features.

In particular, the composition according to the invention comprises:
- between 35 % and 65 % by weight of a silylated polymer, preferably of formula (II") and/or (III'),
- between 25 % and 50 % by weight of a composite filler comprising calcium carbonate and silica, preferably having an average particle size Dv50 comprised between 0.3 µm and 10 µm, and preferably further comprising magnesium carbonate,
- between 0.1 % and 1 % by weight of a crosslinking catalyst,
- optionally between 0.5 % and 3 % by weight of an adhesion promoter, and
- optionally between 0.5 % and 5 % by weight of one or more additives, preferably selected from fillers other than the composite filler, moisture scavengers, pigments, plasticizers, solvents, rheology agents, UV stabilizers (or antioxidants), and mixtures thereof,
the weight percentages being with respect to the total weight of the composition.

Preferably, the composition according to the invention consists essentially of the ingredients mentioned above.

The ingredients of this embodiment and their particular contents are as described above, including the embodiments and preferred features.

Advantageously, the composition according to the invention has a shear strength of at least 1.5 MPa, preferably comprised between 1.8 MPa and 5 MPa. The shear strength may be measured on anodized aluminum 6061 substrates, for example as described in Example 1 hereinafter.

Advantageously, the composition according to the invention has a viscosity at 23°C of at most 200 Pa.s, preferably comprised between 10 Pa.s and 150 Pa.s, more preferably between 20 Pa.s and 100 Pa.s. The viscosity may be measured at 10 s⁻¹ shear rate on a rheometer, for example as described in Example 1 hereinafter.

The composition according to the invention can be prepared by simple mixing of its ingredients. An example of preparation of the composition according to the invention is described in Example 1.

The composition according to the invention is preferably stored in an anhydrous environment, for example in hermetic packaging, where said composition is protected from humidity and preferably protected from light.

### Method for bonding substrates

The invention also relates to a method for bonding substrates comprising the steps of:
- coating, on at least one surface of the substrates, of the composition according to the invention as described above (including the embodiments and preferred features), then
- contacting the substrates.

It is understood that, during the coating step and the contacting step, the composition according to the invention is in an uncured state.

The substrates may be identical or different.

The substrates to be implemented may be vary varied, and are advantageously made of plastic, metal and/or composite materials. Preferably, at least one of the substrates is made of a metal material, more preferably the substrates are made of a metal material.

The plastic material may be a polyolefin, such as polyethylene or polypropylene, or a polyester.

The metal material may be pure or an alloy, and is advantageously aluminum or steel, preferably aluminum.

The composite material may be a reinforced plastic material, such as fiber-reinforced plastic, in particular sheet moulding composite (SMC). The fibers in the fiber-reinforced plastic may be glass, carbon, aramid or basalt fibers, preferably glass fibers. The fiber length may vary between 6 mm and 50 mm. The polymer in the reinforced plastic material may be polyester, polyolefin, epoxy or vinyl ester resin, preferably polyester or polyolefin (such as polyethylene or polypropylene). The polymer in the reinforced plastic material is preferably unsaturated. The reinforced plastic material may comprise other compounds than the fibers and the polymer (such as filler and/or catalyst).

### Article

The invention further relates to an article comprising the (cured or uncured) composition according to the invention as described above (including the embodiments and preferred features), said composition bonding at least two substrates of said article.

The article may be obtained thanks to the method for bonding substrates according to the invention.

The substrates are preferably as described above for the method for bonding substrates according to the invention (including the embodiments and preferred features), in particular the substrates are made of a metal material.

Advantageously, the article is an electronic article, such as a speaker, an earphone, a device comprising an HD (high definition) screen, etc.

### Use of the composition according to the invention

The invention further relates to the use of the composition according to the invention as an adhesive or a sealant, preferably as a sealant, in particular in the manufacture of an electronic article.

The composition according to the invention is as described above, including the embodiments and preferred features.

All the embodiments described above can be combined with each other. In particular, the various aforementioned ingredients in the composition, and in particular the preferred embodiments, can be combined with each other.

The following examples illustrate the invention without limiting it.

### EXAMPLES

### Example 1: Materials and methods

### Materials

The following materials were implemented:
- MS POLYMER^{®} S303H commercialized by KANEKA: polyether polymer terminated with methyldimethoxysilyl groups and having a number average molecular weight of about 23000 g/mol, silylated polymer;
- GENIOSIL^{®} STP-E15 commercialized by WACKER: polyether polymer terminated with trimethoxysilylpropylcarbamate groups, silylated polymer;
- HAKUENKA^{®} CCR-S commercialized by Omya: precipitated calcium carbonate coated with fatty acids having an average particle size of 80 nm, filler;
- Omyacarb^{®} 4T commercialized by Omya: ground calcium carbonate having an average particle size of 3.5 µm, filler;
- Composite filler commercialized by GREENORE: co-precipitated filler comprising 94 wt% of CaCO₃, 5 wt% of SiO₂ and 0.85 wt% of MgCO₃ on the total weight of the filler, and having an average particle size of 3.5 µm;
- DYNASYLAN^{®} VTMO commercialized by EVONIK: vinyltrimethoxysilane (CAS: 2768-02-7), moisture scavenger;
- DYNASYLAN^{®} AMMO commercialized by EVONIK: (3-aminopropyl)trimethoxysilane (CAS: 13822-56-5), adhesion promoter;
- TIB KAT^{®} 226 commercialized by TIB Chemicals: dibutyltin bis(2,4-pentanedionate) (CAS: 22673-19-4), catalyst.

### Preparation of compositions A-E

Compositions A-E were prepared by mixing (speedmixer DAV 400) the ingredients indicated in Table 1 at room temperature, e.g. 18°C-25°C (the temperature in the mixture may increase during its preparation due to friction shear), and at atmospheric pressure. The silylated polymer and VTMO were charged into mixing cup and firstly mixed (e.g. for about 2 min under about 2000 rpm (revolutions per minute)). Then the filler was loaded and mixed (e.g. for about 3 min under about 2000 rpm). AMMO and TIB KAT 226 were then added into cup and mixed under vacuum (e.g. for about 2min under about 2000 rpm, pressure of about 20 kPa). After their preparation, the compositions were stored into sealed cartridges, until their properties are evaluated.

### Shear strength

Shear strength was measured on standard anodized aluminum 6061 substrates. A shear strength specimen was prepared by bonding two anodized aluminum panels (100mm*25mm*2mm), overlapping 12.5mm*25mm*2mm glue dimension (with the composition to be tested). The shear specimen was placed in standard conditions (23°C +/- 2°C, 50 %RH +/- 5 %RH (RH for relative humidity)) for 14 days, and then pulled on an Instron machine by 50mm/min. Shear strength was then calculated by dividing the pulling force necessary to break the specimen by square of 12.5mm*25mm.

### Viscosity

Viscosity was measured on a rheometer (TA DHR-2) with a flow sweep at 23°C and the viscosity D10S⁻¹ was read from the flow curve at 10 s⁻¹ shear rate.

### Example 2: Comparison of composition according to the invention and comparative compositions

Compositions A-E were prepared as described in Example 1 ("Preparation of compositions A-E") with the ingredients indicated in Table 1, the percentages being weight percentages with respect to the total weight of the composition.

**Table 1: Ingredients of compositions A-E**

| **Ingredients** | **A (comp.)** | **B (inv.)** | **C (inv.)** | **D (inv.)** | **E (comp.)** |
|---|---|---|---|---|---|
| MS POLYMER^{®} S303H | 52% | 52% | - | 62% | 52% |
| GENIOSIL^{®} STP-E15 | - | - | 52% | - | - |
| HAKUENKA^{®} CCR-S | 45% | - | - | - | - |
| Omyacarb^{®} 4T | - | - | - | - | 45% |
| Composite filler | - | 45% | 45% | 35% | |
| DYNASYLAN^{®} VTMO | 1.0% | 1.0% | 1.0% | 1.0% | 1.0% |
| DYNASYLAN^{®} AMMO | 1.7% | 1.7% | 1.7% | 1.7% | 1.7% |
| TIB KAT^{®} 226 | 0.3% | 0.3% | 0.3% | 0.3% | 0.3% |

Their properties were then evaluated as described in Example 1 ("Shear strength" and "Viscosity") and the results are indicated in Table 2.

**Table 2: Properties of compositions A-E**

| **Properties** | **A (comp.)** | **B (inv.)** | **C (inv.)** | **D (inv.)** | **E (comp.)** |
|---|---|---|---|---|---|
| Shear Strength | 2.8 MPa | 2.5 MPa | 3.0 MPa | 2.1 MPa | 1.3 MPa |
| Viscosity | 280 Pa.s | 55 Pa.s | 31 Pa.s | 35 Pa.s | 46 Pa.s |

Comparative composition A, comprising precipitated calcium carbonate as the filler, has a high shear strength but also a high viscosity, which is not suitable for applications like electronics which require thin glue lines.

When precipitated calcium carbonate is replaced by ground calcium carbonate, the viscosity of the composition significantly decreases and makes it possible to apply the composition as thin lines (comparison of comparative compositions A and E). However, this is to the detriment of its shear strength, which decreases significantly, i.e. comparative composition E has significantly lower adhesive properties than comparative composition A. Consequently, comparative composition E is not suitable for applications like electronics.

However, implementing the composite filler according to the invention makes it possible to obtain a composition having both a high shear strength and a low viscosity. Indeed, compositions B-D according to the invention have at the same time a high shear strength, which is significantly higher than comparative composition E (implementing ground calcium carbonate), and a low viscosity, which is lower than comparative composition A (implementing precipitated calcium carbonate).

Therefore, compositions B-D according to the invention are suitable for applications like electronics which require thin glue lines and a high cohesive strength of the glue.

## Claims

1. A composition comprising:
- a silylated polymer, and
- a composite filler comprising calcium carbonate and silica.

2. The composition according to claim 1, wherein the silylated polymer is of formula (II), (III) and/or (IV): 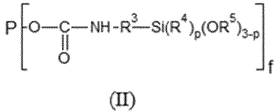 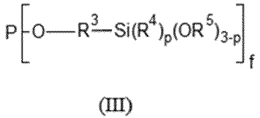 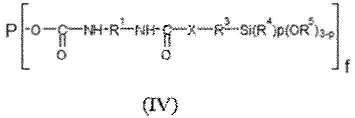 wherein:
- R⁴, R⁵ and p have the same meaning as in formula (I) described above,
- P represents a saturated or unsaturated polymeric radical, with a linear or branched open chain, or comprising one or more rings being optionally aromatic, optionally comprising one or more heteroatoms such as oxygen, nitrogen, sulfur and/or silicon, preferably oxygen and/or nitrogen,
- R¹ represents a divalent saturated or unsaturated hydrocarbon radical comprising from 5 to 15 carbon atoms, being a linear or branched open chain, or comprising one or more rings being optionally aromatic,
- R³ represents a divalent linear or branched alkylene radical comprising from 1 to 6 carbon atoms, preferably from 1 to 3 carbon atoms,
- X represents a divalent radical chosen from -NH-, -NR⁷- or -S-,
- R⁷ represents a linear or branched alkyl radical comprising from 1 to 20 carbon atoms and optionally comprising one or more heteroatoms,
- f is an integer ranging from 1 to 6, preferably from 2 to 4, more preferably equal to 2 or 3.

3. The composition according to claim 2, wherein the silylated polymer is of formula (II'), (II"), (III') and/or (IV'): 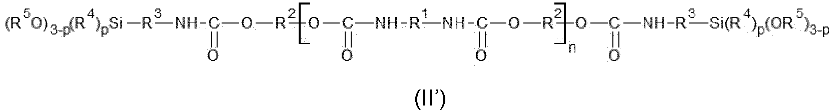 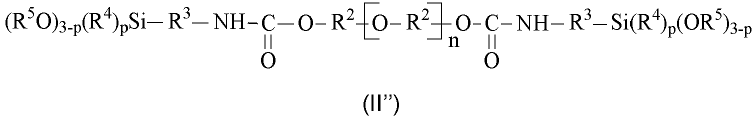 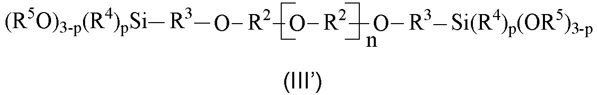 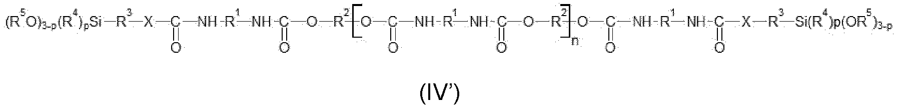 wherein:
- R¹, R³, R⁴, R⁵, X, R⁷ and p have the same meaning as in formulas (II), (III) and (IV),
- R² represents a saturated or unsaturated, linear or branched, divalent hydrocarbon radical, optionally comprising one or more heteroatoms such as oxygen, nitrogen, sulfur and/or silicon,
- n is an integer, preferably n is such that the number average molecular weight of the silylated polymer varies from 1000 g/mol to 70000 g/mol, preferably from 5000 g/mol to 50000 g/mol, more preferably from 10000 g/mol to 40000 g/mol.

4. The composition according to claim 3, wherein the silylated polymer is of formula (II") and/or (III').

5. The composition according to any one of claims 1 to 4, wherein the composite filler comprises between 80 % and 99 % by weight of calcium carbonate with respect to the total weight of the composite filler, preferably between 87 % and 98 % by weight, more preferably between 91 % and 97 % by weight.

6. The composition according to any one of claims 1 to 5, wherein the composite filler comprises between 0.5 % and 10 % by weight of silica with respect to the total weight of the composite filler, preferably between 2 % and 8 % by weight, more preferably between 3 % and 7 % by weight.

7. The composition according to any one of claims 1 to 6, wherein the composite filler further comprises magnesium carbonate.

8. The composition according to any one of claims 1 to 7, wherein the average particle size Dv50 of the composite filler is comprised between 0.3 µm and 10 µm, preferably between 1 µm and 5 µm.

9. The composition according to any one of claims 1 to 8, wherein the composite filler content is comprised between 10 % and 60 % by weight with respect to the total weight of the composition, preferably between 20 % and 55 % by weight, more preferably between 25 % and 50 % by weight.

10. The composition according to any one of claims 1 to 9, further comprising a crosslinking catalyst.

11. The composition according to any one of claims 1 to 10, further comprising an adhesion promoter.

12. The composition according to any one of claims 1 to 11, further comprising one or more additives, preferably selected from fillers other than the composite filler, moisture scavengers, pigments, plasticizers, solvents, rheology agents, UV stabilizers, and mixtures thereof.

13. A method for bonding substrates comprising the steps of:
- coating, on at least one surface of the substrates, of the composition according to any one of claims 1 to 12, then
- contacting the substrates.

14. An article comprising the composition according to any one of claims 1 to 12, said composition bonding at least two substrates of said article.

15. Use of the composition according to any one of claims 1 to 12 as an adhesive or a sealant.
